# FASCICULE DE BREVET EUROPEEN

(11) **EP 3 814 694 B1**
(45) Date de publication et mention de la délivrance du brevet: **08.03.2023**
(21) Numéro de dépôt: 19748857.0
(22) Date de dépôt: 26.06.2019
(51) Int. Cl.: F25B 9/02, F25B 49/02, F16K 17/40, F42B 15/34, B33Y 80/00, B33Y 10/00, B29C 64/153, F16K 17/16

(54) **PIÈCE POUR REFROIDISSEUR JOULE-THOMSON ET PROCÉDÉ DE FABRICATION D'UNE TELLE PIÈCE**
TEIL FÜR EINEN JOULE-THOMSON-KÜHLER UND VERFAHREN ZUR HERSTELLUNG EINES SOLCHEN TEILS
PART FOR JOULE-THOMSON COOLER AND METHOD FOR MANUFACTURING SUCH A PART

(30) Priorité: 26.06.2018 FR 1855707
(43) Date de publication de la demande: 05.05.2021
(73) Titulaire: SAFRAN ELECTRONICS & DEFENSE, 92100 Boulogne Billancourt (FR)
(72) Inventeur: COTTEREAU, Bertrand, 92100 BOULOGNE-BILLANCOURT (FR); DUVAL, Nicolas, 92100 BOULOGNE-BILLANCOURT (FR); BORDAIS, Edwina, 92100 BOULOGNE-BILLANCOURT (FR); BIDAUD, Michel, 92100 BOULOGNE-BILLANCOURT (FR)
(74) Mandataire: Regimbeau
(86) Numéro de dépôt international: PCT/FR2019/051575
(87) Numéro de publication internationale: WO 2020/002834

(56) Documents cités:
- EP-A1- 3 034 917
- FR-A1- 2 883 365
- US-A- 3 188 824
- WILDGOOSE ALEXANDER J ET AL: "Impact of Additive Manufacturing on Internal Cooling Channels With Varying Diameters and Build Directions", PROCEEDINGS OF ASME TURBO EXPO 2020 - TURBOMACHINERY TECHNICAL CONFERENCE AND EXPOSITION, vol. 7A, 21 September 2020 (2020-09-21), pages 1-12, XP055961499, London, England DOI: 10.1115/GT2020-15049 ISBN: 978-0-7918-8416-4 Retrieved from the Internet: URL:http://asmedigitalcollection.asme.org/ GT/proceedings-pdf/doi/10.1115/GT2020-1504 9/6615833/v07at15a017-gt2020-15049.pdf>

## Description

### DOMAINE DE L'INVENTION

La présente invention concerne une pièce pour un refroidisseur Joule-Thomson et un procédé de fabrication d une telle pièce.

### ETAT DE LA TECHNIQUE

De façon connue, un refroidisseur Joule-Thomson est un dispositif produisant du froid en détendant un gaz à haute pression.

On trouve par exemple ce type de refroidisseur dans des dispositifs de détection infrarouge, dans le but de refroidir un détecteur infrarouge de tels dispositifs. Le gaz détendu passe à proximité du détecteur infrarouge, puis est évacué à l'extérieur du refroidisseur via un conduit d'évacuation de gaz. Un tel refroidisseur est décrit dans le document FR2883365.

Il est connu d'agencer dans le conduit d'évacuation de gaz un opercule pour le fermer. L'opercule empêche ainsi du gaz pollué venant de l'extérieur du refroidisseur d'être introduit dans le refroidisseur ce qui nuirait à son bon fonctionnement.

L'opercule est adapté pour se rompre sous l'effet de la détente de gaz déclenchée par le refroidisseur. Une fois l'opercule rompu, le gaz détendu peut être évacué hors du refroidisseur.

L'opercule, qui constitue une pièce indépendante, est soudée à une pièce métallique dans laquelle le conduit d'évacuation de gaz est formé.

Cependant, l'élément de fermeture formé après assemblage de ces deux pièces a pour inconvénient d'être lourd. Or, dans certaines applications, il est absolument critique d'alléger aux maximum le refroidisseur.

Par ailleurs, une telle soudure est relativement complexe à réaliser. En effet, il est indispensable que cette soudure soit étanche.

Enfin, l'utilisation du métal implique un surcoût de fabrication du refroidisseur.

Une pièce pour un refroidisseur Joule-Thomson est montrée par le document FR 2 883 365 A1. Une fabrication d'une telle pièce par un procédé de fabrication additive est montré par le document EP3034917A1. H

### EXPOSE DE L'INVENTION

Un but de l'invention est de proposer un refroidisseur Joule-Thomson qui soit plus facile et moins cher à fabriquer.

Il est donc proposé, selon un premier aspect, une pièce pour un refroidisseur Joule-Thomson, qui est obtenue par un procédé de fabrication additive, la pièce comprenant un conduit d'évacuation de gaz et un opercule fermant le conduit d'évacuation de gaz, l'opercule étant adapté pour se rompre au moins partiellement sous l'effet d'une détente de gaz déclenchée par le refroidisseur de sorte à permettre une évacuation du gaz hors du refroidisseur par le conduit d'évacuation de gaz.

La pièce comprend un deuxième conduit d'évacuation de gaz distinct du conduit d'évacuation de gaz fermé par l'opercule.

Le procédé de fabrication de la pièce comprend un empilement de couches de poudre suivant un axe d'empilement pour former la pièce, l'axe d'empilement étant parallèle à un axe central du deuxième conduit d'évacuation de gaz.

Former la pièce en empilant les couches de poudre selon cet axe d'empilement particulier a pour avantage de minimiser les imperfections de forme dans la pièce au niveau du deuxième conduit. De telles imperfections seraient susceptibles de nuire à l'étanchéité du deuxième conduit lorsque celui-ci est fermé l'aide d'un élément de fermeture.

La pièce selon le premier aspect peut comprendre en outre les caractéristiques suivantes, prises seules ou combinées entre elles lorsque cela est techniquement faisable.

L'opercule est de préférence non parallèle aux couches de poudres qui ont été empilées pour former la pièce, au cours du procédé de fabrication additive de la pièce.

L'opercule comprend de préférence :
- une première partie de liaison au conduit d'évacuation de gaz, la première partie de liaison étant adaptée pour se rompre sous l'effet de la détente de gaz,
- une deuxième partie de liaison au conduit d'évacuation de gaz, la deuxième partie de liaison) étant adaptée pour rester reliée au conduit d'évacuation de gaz malgré la détente de gaz, la deuxième partie de liaison formant une charnière autour de laquelle l'opercule est susceptible de pivoter par rapport au conduit d'évacuation de gaz une fois la première partie de liaison rompue.

La pièce comprend de préférence une grille agencée dans le conduit d'évacuation de gaz en aval de l'opercule pour retenir l'opercule dans le conduit d'évacuation de gaz lorsque l'opercule est rompu sous l'effet de la détente de gaz, la grille présentant au moins un orifice de sortie débouchant dans le conduit d'évacuation de gaz et à l'extérieur du refroidisseur.

La pièce comprend de préférence une première surface délimitant le conduit d'évacuation de gaz entre l'opercule et la grille, et une deuxième surface délimitant en partie l'orifice de sortie, la deuxième surface prolongeant continûment la première surface.

La pièce est de préférence en matière plastique.

De préférence, la pièce en combinaison avec la grille est un élément monobloc. Ceci contribue à réduire le nombre de pièces du refroidisseur, et simplifie donc encore davantage sa fabrication.

Il est proposé par ailleurs, selon un deuxième aspect, un ensemble pour refroidisseur Joule-Thomson comprenant une pièce selon le premier aspect de l'invention, et un élément de fermeture mobile entre une position ouverte permettant une évacuation du gaz par le deuxième conduit d'évacuation de gaz alors que l'opercule n'est pas rompu, et une position fermée empêchant le gaz d'être évacué par le deuxième conduit d'évacuation de gaz.

L'élément de fermeture comprend de préférence une vis coopérant avec un filetage formé dans le deuxième conduit d'évacuation de gaz.

Cet ensemble peut également comprendre des moyens de retenue pour retenir l'élément de fermeture dans le deuxième conduit d'évacuation de gaz.

Il est proposé, selon un troisième aspect, un refroidisseur Joule-Thomson comprenant la pièce selon le premier aspect ou l'ensemble selon le deuxième aspect.

Il est proposé, selon un quatrième aspect, un dispositif de détection infrarouge comprenant un détecteur infrarouge, et un refroidisseur selon le troisième aspect de l'invention pour refroidir le détecteur infrarouge.

Il est proposé, selon un cinquième aspect, un procédé de fabrication pour obtenir la pièce selon le premier aspect.

Il est également proposé, selon un sixième aspect, un procédé de fabrication d'un refroidisseur Joule-Thomson selon le quatrième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une vue en coupe d'un dispositif de détection infrarouge comprenant un refroidisseur selon un mode de réalisation ;
- Les figures 2a et 2b sont respectivement une vue en perspective et une vie en coupe détaillant certains conduits de gaz du refroidisseur déjà représenté en figure 1 ;
- La figure 3 est une vue de côté d'une pièce d'évacuation du refroidisseur déjà représenté en figure 1 ;
- La figure 4 est une vue en coupe longitudinale de la pièce d'évacuation du refroidisseur déjà représentée en figure 3 ;
- La figure 5 est une vue en coupe schématique d'une portion de conduit d'évacuation défini par la pièce d'évacuation de la figure 3 ;
- La figure 6 détaille également une partie d'un opercule présent dans la pièce représentée sur les figures 3 à 5 ;
- La figure 7 est une vue de face d'une partie de la pièce d'évacuation de la figure 3 ;
- La figure 8 est une vue en coupe longitudinale partielle de la pièce d'évacuation du refroidisseur déjà représentée en figure 3.

Sur l'ensemble des figures, les éléments similaires portent des références identiques.

### DESCRIPTION DETAILLEE DE L'INVENTION

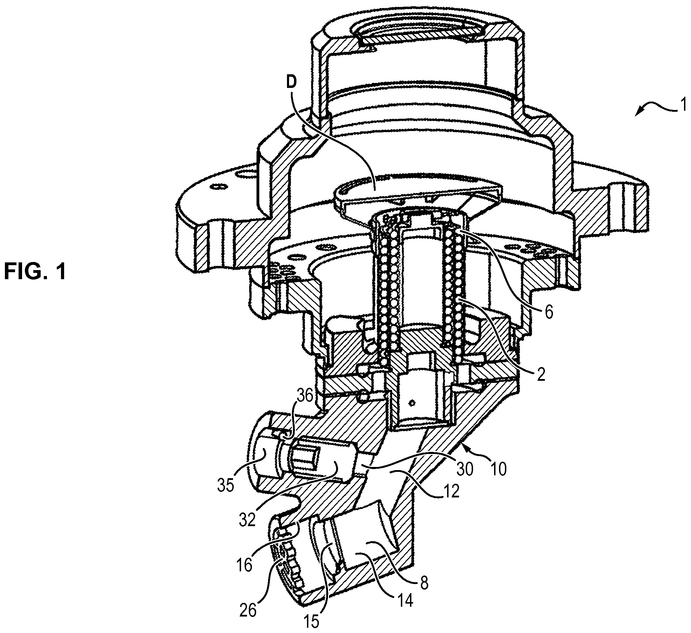

En référence à la **figure 1****,** un dispositif de détection infrarouge comprend un détecteur infrarouge D et un refroidisseur 1 pour refroidir le détecteur infrarouge D.

Le dispositif de détection infrarouge est par exemple un autodirecteur pour missile.

Le refroidisseur 1 est un refroidisseur de type Joule-Thomson utilisant du gaz pour refroidir le détecteur infrarouge.

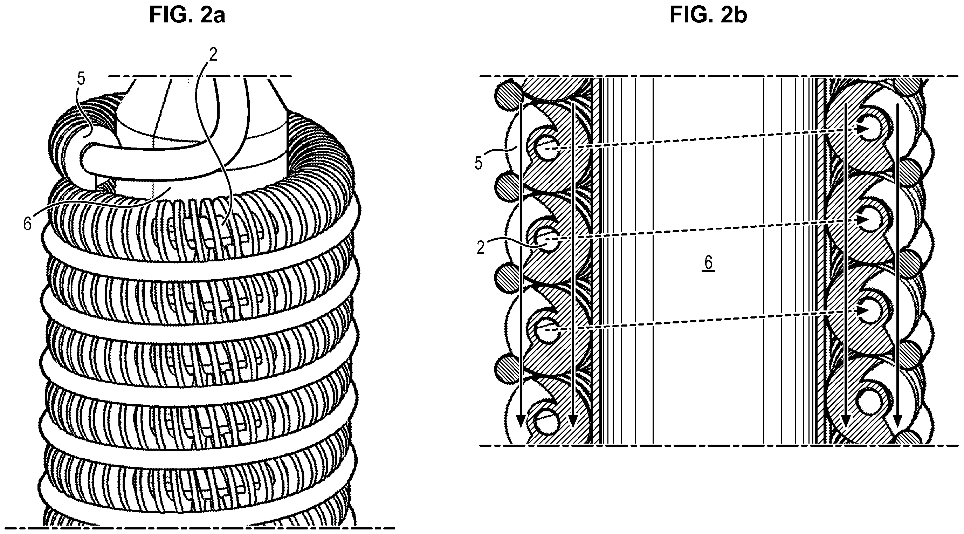

De façon connue en elle-même, le refroidisseur 1 comprend un conduit d'admission de gaz 2 comprenant un orifice d'admission de gaz 4 (visible en **figure 2**) et se terminant par un orifice de détente (ou gicleur) agencé à proximité du détecteur D.

L'orifice d'admission est lui-même relié à un réservoir de gaz (non représenté sur les figures) via un tuyau ou tube 6. Le réservoir de gaz est typiquement une bouteille de gaz compressé à plusieurs centaines de bars, par exemple 700 bars.

Le conduit d'admission de gaz 2 comprend notamment une partie hélicoïdale, de manière à présenter une longueur importante dans un volume relativement faible.

En référence aux **figures 2a et 2b****,** Cette partie hélicoïdale comprend un tube enroulé autour d'un support cylindrique, et une pluralité d'ailettes 5 faisant radialement saillie autour du tube. Du gaz circulant dans ce tube suit une trajectoire hélicoïdale vers l'orifice de détente (cette trajectoire est indiquée par des flèches en pointillés sur la figure 2b orientées vers le haut).

Le refroidisseur 1 comprend par ailleurs un deuxième conduit 6 dans lequel débouche également l'orifice de détente.

Le deuxième conduit 6 est agencé pour recevoir du gaz en provenance de l'orifice de détente, au cours du fonctionnement du refroidisseur 1.

Le deuxième conduit 6 est formé dans un espace annulaire dans lequel est enroulé la partie hélicoïdale du conduit d'admission de gaz 2. Dans cet espace annulaire, la partie hélicoïdale occupe un certain volume, mais du gaz peut circulaire entre les ailettes 5, selon une trajectoire sensiblement rectiligne (indiquée par plusieurs flèches parallèles orientées vers le bas sur la figure 2b).

Le conduit d'admission de gaz 2 et le deuxième conduit 6 sont en échange thermique l'un avec l'autre puisque le gaz qui circule dans le deuxième conduit 6 vient en contact avec les ailettes 5 du tube qui forme la partie hélicoïdale du conduit d'admission 2.

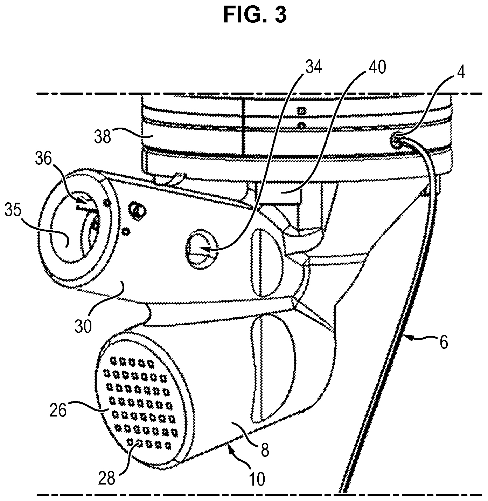

En référence à la **figure 3****,** le refroidisseur 1 comprend par ailleurs un conduit d'évacuation de gaz 8.

Le conduit d'évacuation de gaz 8 est agencé pour recevoir du gaz en provenance du deuxième circuit 6, au cours du fonctionnement du refroidisseur 1. Il a pour fonction d'évacuer Le gaz qu'il reçoit à l'extérieur du refroidisseur 1.

Le conduit d'évacuation de gaz 8 est formé dans une pièce 10 du refroidisseur 1 qui est obtenue par un procédé de fabrication additive.

De préférence, la pièce est un élément monobloc.

La pièce 10 est en matériau plastique. Un tel matériau présente comme avantage d'être beaucoup plus léger que du métal.

La pièce comprend par exemple du nylon. Ce matériau présente l'avantage d'être particulièrement adapté à des applications cryogéniques.

Le conduit d'évacuation de gaz 8 est coudé. En d'autres termes, il comprend une première partie de conduit 12 présentant un premier axe d'écoulement de gaz, et une deuxième partie de conduit 14 en aval de la première partie de conduit 12, la deuxième partie de conduit 14 présentant un deuxième axe d'écoulement de gaz différent du premier axe d'écoulement de gaz. Toutefois, le conduit d'évacuation de gaz 8 peut être droit dans un autre mode de réalisation.

La deuxième partie de conduit 14 est définie par une surface 16 fermée sur elle-même autour du deuxième axe d'écoulement de gaz. Cette surface 16 présente typiquement une forme de révolution, bien que cela ne soit pas strictement nécessaire.

Le conduit d'évacuation de gaz 8 se termine par une sortie de gaz 18 débouchant à l'extérieur du refroidisseur.

La pièce 10 comprend un opercule 15 agencée dans le conduit d'évacuation de gaz 8, afin de fermer le conduit d'évacuation de gaz 8.

L'opercule 15 est agencé en amont de la sortie de gaz 18. Un gaz provenant du conduit 6 est ainsi empêché d'atteindre la sortie de gaz par l'opercule 15. De même, un gaz pénétrant dans le refroidisseur par la sortie de gaz 18 est empêché d'atteindre le conduit 6 et le détecteur D à cause de l'opercule 18, ce qui polluerait l'intérieur du refroidisseur 1.

Par ailleurs, l'opercule 15 est agencé dans la deuxième partie du conduit d'évacuation de gaz 8.

L'opercule 15 présente une forme globale de disque.

L'opercule s'étend perpendiculairement au deuxième axe d'écoulement de gaz.

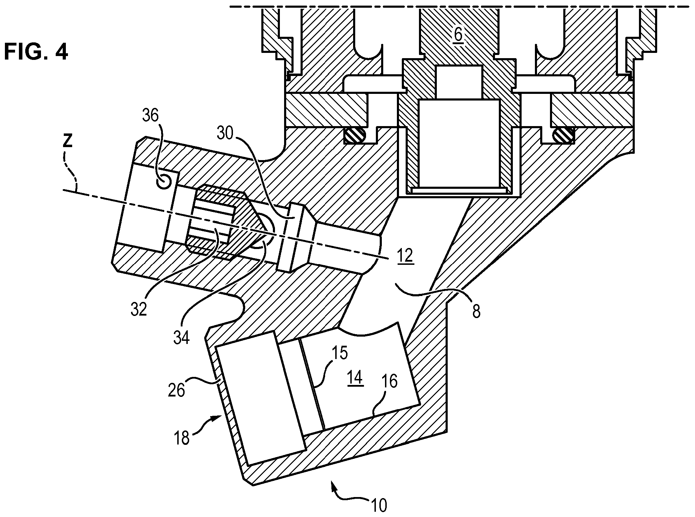

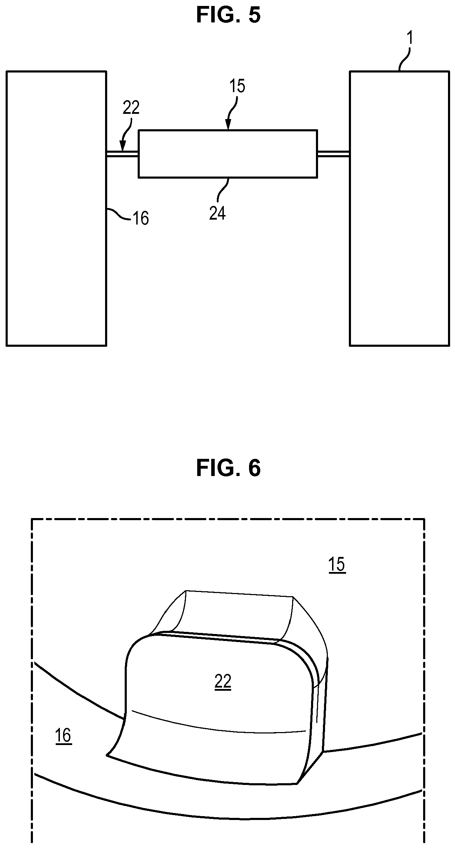

En référence aux **figures 4** **et** **5****,** l'opercule 15 est relié au conduit par une première partie de liaison 20 et une deuxième partie de liaison 22 (ces parties formant une circonférence du disque).

La première partie de liaison 20 est une partie fragilisée, adaptée pour se rompre sous l'effet d'une détente de gaz déclenchée par le refroidisseur 1.

La deuxième partie de liaison 22 au conduit est une partie comparativement plus solide que la première partie de liaison 20. Elle est adaptée pour rester reliée au conduit malgré le déclenchement de la même détente de gaz déclenchée par le refroidisseur 1.

La deuxième partie de liaison 22 forme une charnière. L'opercule 15 est susceptible de pivoter autour de la deuxième partie de liaison 22 formant charnière par rapport au conduit d'évacuation de gaz 8 de gaz une fois la première partie de liaison 20 rompue, sorte à permettre une évacuation du gaz par le conduit d'évacuation de gaz.

La deuxième partie de liaison 22 formant une charnière s'étendant sur un secteur angulaire de moins de 10 degrés autour du deuxième axe d'écoulement de gaz.

Typiquement, la deuxième partie présente une épaisseur plus grande que la première partie.

Comme le montre la figure 5, la deuxième partie se présente typiquement sous la forme d'un élément faisant saillie depuis la face aval de l'opercule 15 et depuis la surface 16 délimitant le conduit d'évacuation de gaz 8.

En référence à la **figure 6****,** la pièce 10 comprend par ailleurs une grille 26 située en aval de l'opercule 15, à distance de celui-ci. La grille 26 est en regard de la face aval de l'opercule 15.

La grille 26 est agencée à la sortie du conduit d'évacuation de gaz 8.

La grille 26 définit une pluralité d'orifices de sortie 28 ; la grille 26 empêche l'opercule 15 d'être éjecté hors du refroidisseur 1.

La distance entre la grille 26 et l'opercule 15 est de préférence supérieure au diamètre de l'opercule 15. De la sorte, l'opercule 15 a suffisamment de place pour pivoter jusqu'à 90 degrés dans le conduit d'évacuation de gaz 8 autour de sa partie de liaison 22 formant charnière, sans toucher la grille 26 au cours de son pivotement autour de la deuxième partie de liaison 22 formant charnière. Ceci permet d'éviter que l'opercule 15 obstrue des orifices de la grille 26 et que cette grille 26 ne limite l'angle de pivotement de l'opercule 15.

Au moins une partie de la surface délimitant l'un des orifices 28 de la grille 26 prolonge continûment la surface 16 du deuxième conduit 6. On entend par prolongement continu un prolongement dénué de tout aspérité. Un tel agencement facilite la sortie de grains de poudre excédentaires depuis l'intérieur du deuxième conduit 6 vers l'extérieur du refroidisseur 1 (on verra dans la suite qu'une telle poudre sert de matériau de départ pour fabriquer la pièce 10 dans laquelle le conduit d'évacuation de gaz 8 et la grille 26 sont formée).

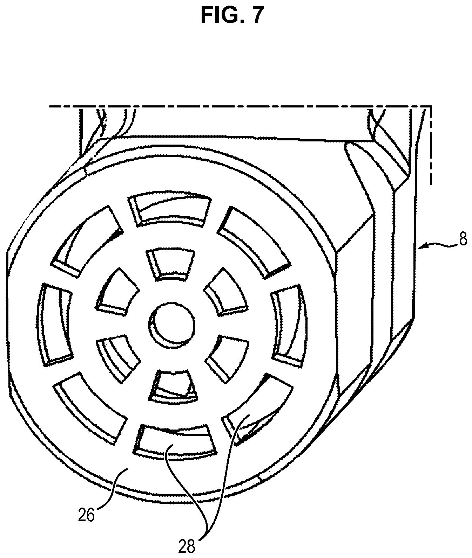

En référence à la **figure 7**, la pièce 10 comprend par ailleurs un autre conduit d'évacuation de gaz 30, qui sera dans la suite appelé conduit de test 30.

Le conduit de test 30 est agencé pour recevoir du gaz en provenance du deuxième conduit 6, au cours du fonctionnement du refroidisseur 1.

Le conduit de test 30 débouche dans la première partie 12 du conduit d'évacuation de gaz 8.

Le conduit de test 30 est de révolution autour d'un axe central de ce conduit de test.

L'axe central de ce conduit de test 30 n'est pas parallèle au deuxième axe d'écoulement de gaz. Autrement dit, la deuxième partie du conduit d'évacuation de gaz 8 et le conduit de test 30 ne sont pas parallèles.

Le refroidisseur 1 comprend un élément de fermeture 32 du deuxième conduit 6. L'élément de fermeture 32 est mobile entre une position ouverte permettant une évacuation du gaz par le deuxième conduit 6 d'évacuation de gaz, et une position fermée empêchant le gaz d'être évacué par le deuxième 32 conduit 6 d'évacuation de gaz.

L'élément de fermeture 32 est indépendant de la pièce 10.

L'élément de fermeture 32 est par exemple une vis. Le conduit de test 30 présente dans ce cas un filetage adapté pour coopérer avec la vis 32. L'axe de vissage de la vis est l'axe central Z du conduit de test 30.

Le conduit de test présente notamment un tronçon définissant une surface conique. Une portion d'extrémité de la vis, également de forme conique, vient s'écraser contre la surface conique de ce tronçon dans la position fermée de la vis.

La pièce 10 présente un orifice de test 34 débouchant dans le conduit de test 30 et à l'extérieur de la pièce 10.

Lorsque l'élément de fermeture 32 est placé dans sa position fermée, cet élément de fermeture 32 bouche cet orifice de test 34. Lorsque l'élément de fermeture 32 est dans sa position ouverte, l'élément de fermeture 32 ne bouche plus totalement cet orifice de test 34, ce qui permet à du gaz contenu dans le conduit de test de sortir hors du refroidisseur 1 par l'orifice de test 34.

La pièce 10 présente un autre orifice 35 débouchant dans le conduit de test 30 et à l'extérieur de la pièce 10. C'est par cet orifice 35 que l'élément de fermeture 32 peut être introduit à l'intérieur du conduit de test 30.

C'est également par cet orifice 35 qu'un instrument tel qu'un tournevis peut être introduit pour visser/dévisser la vis, de manière à la déplacer dans sa position ouverte ou sa position fermée.

Le refroidisseur 1 comprend en outre des moyens de retenue 36 de l'élément de fermeture dans le deuxième conduit 6 d'échappement de gaz.

Ces moyens de retenue 36 comprennent par exemple une goupille engagée dans un passage transversal au conduit d'essai 30, ce passage transversal étant situé entre l'orifice 35 et l'élément de fermeture 32 engagé dans le conduit d'essai 30.

Les moyens de retenue 36 sont agencés de sorte à permettre à l'instrument introduit par l'orifice 35 de venir en prise avec l'élément de fermeture 32, de sorte à déplacer cet élément de fermeture dans sa position fermée et dans sa position ouverte.

Lorsque les moyens de retenus 36 forment une goupille s'étendant dans un passage transversal, il est fait en sorte que ce passage soit décalé par rapport à l'axe central du conduit de test (cet axe central Z correspondant typiquement à l'axe de vissage /dévissage de la vis).

La pièce 10 comprend par ailleurs une partie d'attache 38 pour attacher la pièce 10 au reste du refroidisseur 1. Lorsque la partie d'attache 38 est attachée au reste du refroidisseur, le conduit 6 et le conduit d'évacuation de gaz 8 sont mis en communication fluidique.

La partie d'attache 38 comprend typiquement une collerette présentant une pluralité d'orifices d'attache, dans lesquelles des éléments d'attache 40 peuvent être engagés pour que la partie d'attache 38 soit fixée au reste du refroidisseur.

Comme indiqué précédemment, la pièce 10 est obtenue par un procédé de fabrication additive.

De façon connue, un tel procédé utilise comme matériau de départ une poudre. La poudre est en matière plastique.

Plusieurs couches de poudre sont empilées les unes sur les autres suivant une direction d'empilement Z. Les couches s'étendent dans des plans respectifs (X, Y) perpendiculaires à la direction Z. Pour chaque couche de poudre, un laser chauffe localement certaines zones de la couche de manière à faire en sorte que les grains se trouvant dans ces zones se fixent les uns aux autres. Ce sont ces grains fixés les uns aux autres qui forment la pièce 10.

Il est choisi comme direction d'empilement une direction parallèle à l'axe central Z du conduit de test 30.

Former la pièce 10 en empilant les couches de poudre selon cet axe d'empilement Z particulier a pour avantage de minimiser les imperfections de forme dans la pièce 10 au niveau du conduit de test 30. De telles imperfections seraient susceptibles de nuire à l'étanchéité du conduit de test 30 lorsque l'élément de fermeture est dans sa position fermée.

La pièce 10 présente des stries indicatives de l'orientation des couches de poudre qui ont été empilées au cours du procédé de fabrication additive de cette pièce 10. En examinant ces stries, si besoin à l'aide d'un microscope, il est possible d'en déduire l'axe d'empilement Z de couches qui a été choisi. Dans le cas où si cet axe d'empilement Z est parallèle à l'axe central du conduit de test 30, le conduit de test 30 présente des stries s'étendant autour de l'axe central du conduit, perpendiculairement à l'axe central du conduit (si le conduit est de révolution, ces stries sont alors circulaires). Dans le cas contraire, les stries ne sont pas perpendiculaires à l'axe central du conduit de test.

Par ailleurs, il est de préférence fait en sorte que l'opercule 15 ne soit pas parallèle aux plans des couches de poudre. Ceci permet de faciliter une rupture de l'opercule 15. En l'occurrence, cette condition est satisfaite lorsque l'axe central du conduit de test 30 est parallèle à l'axe d'empilement des couches et lorsque les conduits 8, 30 ne sont pas parallèles.

Une fois la pièce 10 formée, des grains excédentaires peuvent se trouvent dans le conduit d'évacuation de gaz 8 entre la grille 26 et l'opercule 15. Ces grains excédentaires sont évacués hors de la pièce 10 en orientant le conduit d'évacuation de gaz 8 vers le bas. La disposition particulière de certains des orifices de sortie 28 formés dans la grille 26 facilite l'évacuation de ces grains excédentaires.

Il existe deux modes de fonctionnement du refroidisseur 1 : un mode de test, et un mode de fonctionnement normal.

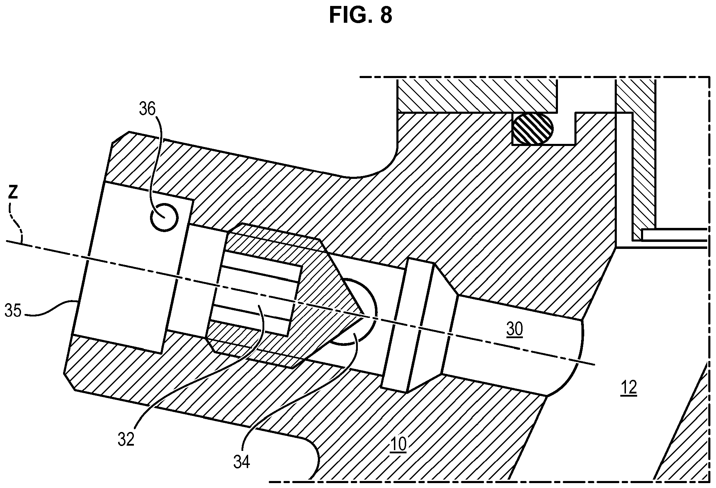

Dans le mode de test, l'élément de fermeture 32 est placé dans la position ouverte, comme cela est représenté sur la **figure 8****.**

Ensuite, le refroidisseur 1 est mis en route.

De façon conventionnelle, un gaz sous haute pression pénètre dans le premier conduit 2 via l'orifice d'admission 4, circule dans la partie hélicoïdale à ailettes 5 selon la trajectoire hélicoïdale indiquée sur la figure 2b, subit une détente au niveau de l'orifice de détente, ce qui a pour effet de refroidir ce gaz au niveau du détecteur D. Le détecteur D est donc lui-même refroidi par le gaz détendu. Le gaz refroidi et détendu circule ensuite dans le deuxième conduit 6, passe entre les ailettes 5 du tube formant la partie hélicoïdale du conduit d'admission 2. Il est à noter que le gaz circulant dans le deuxième conduit 6 contribue également à refroidir le gaz circulant dans le conduit d'admission de gaz 2 vers l'orifice de détente, puisqu'un échange thermique se produit entre les conduits 2 et 6 via les ailettes 5.

Le gaz refroidi pénètre ensuite dans le conduit d'évacuation de gaz 8 formé dans la pièce 10.

Comme l'élément de fermeture 32 est placé dans la position ouverte, le gaz refroidi peut être évacué hors du refroidisseur 1 via l'orifice de test 34. Ce mode de test permet de vérifier le bon fonctionnement du refroidisseur 1 à l'aide de gaz, sans pour autant rompre l'opercule 15.

Dans le mode de fonctionnement normal, l'élément de fermeture 32 est placé dans la position de fermeture.

Ensuite, le refroidisseur 1 est mis en route. Le gaz suit le même trajet que celui décrit pour le mode de test en amont du conduit d'évacuation de gaz 8.

Le gaz refroidi pénètre ensuite dans le conduit d'évacuation de gaz 8.

Comme l'élément de fermeture 32 est placé dans la position fermée, le gaz refroidi ne peut pas être évacué hors du refroidisseur 1 via l'orifice de test 34. Le gaz refroidi rompt donc l'opercule 15 au niveau de sa première partie de liaison 20. Après cette rupture, l'opercule 15 pivote autour de sa deuxième partie de liaison 22 par rapport au conduit d'évacuation 8, de manière à laisser passer le gaz plus en aval dans le conduit 8 vers la grille 26. Le gaz est ensuite évacué hors du refroidisseur 1 via les orifices formés dans la grille 26.

Il est à noter que l'opercule 15, une fois rompu, ne peut plus être repositionné dans sa position initiale dans laquelle il ferme le conduit d'évacuation 8.

Il convient donc de remplacer, dans le refroidisseur 1, la pièce 10 dont l'opercule a été rompu par une autre pièce 10 dont l'opercule n'a pas encore été rompu.

## Revendications

1. Pièce (10) pour un refroidisseur Joule-Thomson (1), la pièce (10) comprenant :
• un premier conduit d'évacuation de gaz (8),
• un opercule (15) fermant le premier conduit d'évacuation de gaz (8), l'opercule (15) étant adapté pour se rompre au moins partiellement sous l'effet d'une détente de gaz déclenchée par le refroidisseur (1) de sorte à permettre une évacuation du gaz hors du refroidisseur (1) par le premier conduit d'évacuation de gaz (8),
• un deuxième conduit d'évacuation de gaz (30) distinct du premier conduit d'évacuation de gaz (8),
la pièce étant **caractérisée par le fait qu'**elle est obtenue par un procédé de fabrication additive comprenant un empilement de couches de poudre suivant un axe d'empilement pour former la pièce (10), l'axe d'empilement étant parallèle à un axe central du deuxième conduit d'évacuation de gaz (30).

2. Pièce (10) selon la revendication précédente, dans lequel l'opercule (15) n'est pas parallèle aux couches.

3. Pièce (10) selon l'une des revendications précédentes, dans lequel l'opercule (15) comprend :
• une première partie de liaison (20) de l'opercule (15) au conduit d'évacuation de gaz (8), la première partie de liaison (20) étant adaptée pour se rompre sous l'effet de la détente de gaz,
• une deuxième partie de liaison (22) de l'opercule (15) au conduit d'évacuation de gaz (8), la deuxième partie de liaison (2)) étant adaptée pour rester reliée au conduit d'évacuation de gaz (8) malgré la détente de gaz, la deuxième partie de liaison (22) formant une charnière autour de laquelle l'opercule (15) est susceptible de pivoter par rapport au conduit d'évacuation de gaz (8) une fois la première partie de liaison (20) rompue.

4. Pièce (10) selon l'une des revendications précédentes, comprenant en outre une grille (26) agencée dans le conduit d'évacuation de gaz (8) en aval de l'opercule (15) pour retenir l'opercule (15) dans le conduit d'évacuation de gaz lorsque l'opercule (15) est rompu sous l'effet de la détente de gaz, la grille (26) présentant au moins un orifice de sortie débouchant dans le conduit d'évacuation de gaz et à l'extérieur du refroidisseur (1).

5. Pièce selon la revendication précédente, dans lequel la pièce (10) comprend une première surface (16) délimitant le conduit d'évacuation de gaz (30) entre l'opercule (15) et la grille (26), et une deuxième surface délimitant en partie l'orifice de sortie, la deuxième surface prolongeant continûment la première surface (16).

6. Pièce selon l'une des revendications précédentes, dans lequel la pièce (10) est en matière plastique.

7. Pièce selon l'une des revendications 4 à 5, ou selon la revendication 6 au cas où elle dépend d'une des revendications 4 à 5, dans lequel la pièce est un élément monobloc.

8. Ensemble pour refroidisseur Joule-Thomson (1) comprenant une pièce selon l'une des revendications précédentes, et un élément de fermeture (32) mobile entre une position ouverte permettant une évacuation du gaz par le deuxième conduit (6) d'évacuation de gaz alors que l'opercule n'est pas rompu, et une position fermée empêchant le gaz d'être évacué par le deuxième conduit d'évacuation de gaz (30).

9. Ensemble pour refroidisseur Joule-Thomson (1) selon la revendication précédente, dans lequel l'élément de fermeture (32) comprend une vis coopérant avec un filetage formé dans le deuxième conduit d'évacuation de gaz (30).

10. Ensemble pour refroidisseur Joule-Thomson (1) selon l'une des revendications 8 et 9, comprenant en outre des moyens de retenue (36) pour retenir l'élément de fermeture (32) dans le deuxième conduit d'évacuation de gaz (30).

11. Refroidisseur Joule-Thomson (1) comprenant une pièce selon l'une des revendications 1 à 7 ou un ensemble selon l'une des revendications 8 à 10.

12. Dispositif de détection infrarouge comprenant un détecteur infrarouge (D), et un refroidisseur Joule-Thomson (1) selon l'une des revendications 8 à 11 pour refroidir le détecteur infrarouge.

13. Procédé de fabrication d'une pièce (10) pour un refroidisseur à détente Joule-Thomson configuré pour refroidir un objet à l'aide d'un gaz, la pièce (10) comprenant :
• un premier conduit d'évacuation de gaz (8),
• un opercule (15) fermant le premier conduit d'évacuation de gaz (8), l'opercule (15) étant adapté pour se rompre au moins partiellement sous l'effet d'une détente de gaz déclenchée par le refroidisseur (1) de sorte à permettre une évacuation du gaz hors du refroidisseur par le conduit d'évacuation de gaz,
• un deuxième conduit d'évacuation de gaz (30) distinct du premier conduit d'évacuation de gaz,
le procédé étant **caractérisé en ce qu'**il comprend la mise en oeuvre d'un procédé de fabrication additive pour obtenir la pièce (10), le procédé de fabrication additive comprenant un empilement de couches de poudre suivant un axe d'empilement (Z) pour former la pièce (10), l'axe d'empilement (Z) étant parallèle à un axe central du deuxième conduit d'évacuation de gaz (30).

14. Procédé selon la revendication précédente dans lequel l'opercule (15) n'est pas parallèle aux couches.

15. Procédé de fabrication d'un refroidisseur Joule-Thompson, comprenant la mise en oeuvre du procédé selon l'une des revendications 13 et 14.

## Patentansprüche

1. Teil (10) für einen Joule-Thomson-Kühler (1), wobei das Teil (10) umfasst:
• einen ersten Gasableitungskanal (8),
• einen Deckel (15), der den ersten Gasableitungskanal (8) verschließt, wobei der Deckel (15) geeignet ist, aufgrund einer von dem Kühler (1) ausgelösten Gasentspannung mindestens teilweise zu brechen, so dass eine Ableitung des Gases aus dem Kühler (1) durch den ersten Gasableitungskanal (8) ermöglicht wird,
• einen zweiten Gasableitungskanal (30), der von dem ersten Gasableitungskanal (8) verschieden ist,
wobei das Teil **dadurch gekennzeichnet ist, dass** es durch ein additives Herstellungsverfahren erhalten wird, das einen Pulverschichtstapel gemäß einer Stapelachse zum Formen des Teils (10) umfasst, wobei die Stapelachse parallel zu einer zentralen Achse des zweiten Gasableitungskanals (30) ist.

2. Teil (10) nach vorangehendem Anspruch, wobei der Deckel (15) zu den Schichten nicht parallel ist.

3. Teil (10) nach einem der vorangehenden Ansprüche, wobei der Deckel (15) umfasst:
• einen ersten Verbindungsabschnitt (20) des Deckels (15) mit dem Gasableitungskanal (8), wobei der erste Verbindungsabschnitt (20) geeignet ist, aufgrund der Gasentspannung zu brechen,
• einen zweiten Verbindungsabschnitt (22) des Deckels (15) mit dem Gasableitungskanal (8), wobei der zweite Verbindungsabschnitt (2)) geeignet ist, mit dem Gasableitungskanal (8) trotz der Gasentspannung verbunden zu bleiben, wobei der zweite Verbindungsabschnitt (22) ein Scharnier bildet, um das der Deckel (15) imstande ist, im Verhältnis zum Gasableitungskanal (8) zu schwenken, nachdem der erste Verbindungsabschnitt (20) gebrochen ist.

4. Teil (10) nach einem der vorangehenden Ansprüche, das ferner ein Gitter (26) umfasst, das im Gasableitungskanal (8) dem Deckel (15) nachgelagert eingerichtet ist, um den Deckel (15) im Gasableitungskanal zu halten, wenn der Deckel (15) aufgrund der Gasentspannung gebrochen ist, wobei das Gitter (26) mindestens eine Aufgangsöffnung aufweist, die in den Gasableitungskanal und nach außerhalb des Kühlers (1) ausmündet.

5. Teil nach vorangehendem Anspruch, wobei das Teil (10) eine erste Oberfläche (16) umfasst, die den Gasableitungskanal (30) zwischen dem Deckel (15) und dem Gitter (26) begrenzt und eine zweite Oberfläche, die die Aufgangsöffnung teilweise begrenzt, wobei die zweite Oberfläche die erste Oberfläche (16) fortlaufend verlängert.

6. Teil nach einem der vorangehenden Ansprüche, wobei das Teil (10) aus Kunststoff ist.

7. Teil nach einem der Ansprüche 4 bis 5 oder nach Anspruch 6, wenn es von einem der Ansprüche 4 bis 5 abhängt, wobei das Teil ein einstückiges Element ist.

8. Anordnung für einen Joule-Thomson-Kühler (1), der ein Teil nach einem der vorangehenden Ansprüche und ein zwischen einer geöffneten Position, die eine Ableitung des Gases durch den zweiten Gasableitungskanal (6) gestattet, auch wenn der Deckel nicht gebrochen ist, und einer geschlossenen Position, die verhindert, dass das Gas durch den zweiten Gasableitungskanal (30) abgeleitet wird, bewegliches Verschlusselement (32) umfasst.

9. Anordnung für einen Joule-Thomson-Kühler (1) nach vorangehendem Anspruch, wobei das Verschlusselement (32) eine Schraube umfasst, die mit einem Gewinde zusammenwirkt, die im zweiten Gasableitungskanal (30) ausgebildet ist.

10. Anordnung für einen Joule-Thomson-Kühler (1) nach einem der Ansprüche 8 und 9, die ferner Haltemittel (36) zum Halten des Verschlusselements (32) im zweiten Gasableitungskanal (30) umfasst.

11. Joule-Thomson-Kühler (1), der ein Teil nach einem der Ansprüche 1 bis 7 oder eine Anordnung nach einem der Ansprüche 8 bis 10 umfasst.

12. Infrarotdetektionsvorrichtung, die einen Infrarotdetektor (D) und einen Joule-Thomson-Kühler (1) nach einem der Ansprüche 8 bis 11 zum Kühlen des Infrarotdetektors umfasst.

13. Verfahren zur Herstellung eines Teils (10) für einen Joule-Thomson-Entspannungskühler, der ausgelegt ist, um ein Objekt mit Hilfe eines Gases zu kühlen, wobei das Teil (10) umfasst:
• einen ersten Gasableitungskanal (8),
• einen Deckel (15), der den ersten Gasableitungskanal (8) verschließt, wobei der Deckel (15) geeignet ist, aufgrund einer von dem Kühler (1) ausgelösten Gasentspannung mindestens teilweise zu brechen, so dass eine Ableitung des Gases aus dem Kühler durch den ersten Gasableitungskanal ermöglicht wird,
• einen zweiten Gasableitungskanal (30), der von dem ersten Gasableitungskanal verschieden ist,
wobei das Verfahren **dadurch gekennzeichnet ist, dass** es die Durchführung eines additiven Herstellungsverfahrens zum Erhalten des Teils (10) umfasst, wobei das additive Herstellungsverfahren einen Pulverschichtstapel gemäß einer Stapelachse (Z) zum Formen des Teils (10) umfasst, wobei die Stapelachse (Z) parallel zu einer zentralen Achse des zweiten Gasableitungskanals (30) ist.

14. Verfahren nach vorangehendem Anspruch, wobei der Deckel (15) zu den Schichten nicht parallel ist.

15. Verfahren zur Herstellung eines Joule-Thompson-Kühlers, das die Durchführung des Verfahrens nach einem der Ansprüche 13 und 14 umfasst.

## Claims

1. A part (10) for a Joule-Thomson cooler (1), the part (10) comprising:
• a first gas exhaust duct (8),
• a lid (15) closing the first gas evacuation duct (8), the lid (15) being adapted to break at least partially under the effect of a gas expansion triggered by the cooler (1) so as to allow the gas to be evacuated from the cooler (1) through the first gas evacuation duct (8),
• a second gas evacuation duct (30) separate from the first gas evacuation duct (8),
the part being **characterized by** the fact that it is obtained by an additive manufacturing process comprising a stacking of powder layers along a stacking axis to form the part (10), the stacking axis being parallel to a central axis of the second gas evacuation duct (30).

2. The part (10) according to the preceding claim, wherein the lid (15) is not parallel to the layers.

3. The part (10) according to any of the preceding claims, wherein the lid (15) comprises:
• a first connection portion (20) of the lid (15) to the gas discharge duct (8), the first connection portion (20) being adapted to break under the effect of gas expansion,
• a second connecting portion (22) of the lid (15) to the gas discharge duct (8), the second connecting portion (2) being adapted to remain connected to the gas discharge duct (8) despite the expansion of gas, the second connecting portion (22) forming a hinge about which the lid (15) is capable of pivoting relative to the gas discharge duct (8) once the first connecting portion (20) is broken.

4. Part (10) according to one of the preceding claims, further comprising a grid (26) arranged in the gas evacuation duct (8) downstream of the lid (15) in order to retain the lid (15) in the gas evacuation duct when the lid (15) is broken under the effect of the gas expansion, the grid (26) having at least one outlet opening into the gas evacuation duct and to the outside of the cooler (1).

5. A part according to the preceding claim, wherein the part (10) comprises a first surface (16) delimiting the gas evacuation duct (30) between the lid (15) and the grid (26), and a second surface delimiting in part the outlet orifice, the second surface continuously extending the first surface (16).

6. A part according to any of the preceding claims, wherein the part (10) is made of plastic.

7. The part according to any of the preceding claims, wherein the part is a one-piece element.

8. A Joule-Thomson cooler assembly (1) comprising a part according to one of the preceding claims, and a closure element (32) movable between an open position allowing gas to be discharged through the second gas discharge duct (6) while the lid is not broken, and a closed position preventing gas from being discharged through the second gas discharge duct (30).

9. The Joule-Thomson cooler assembly (1) according to the preceding claim, wherein the closure member (32) comprises a screw cooperating with a thread formed in the second gas discharge duct (30).

10. The Joule-Thomson cooler assembly (1) according to any of claims 8 and 9, further comprising retaining means (36) for retaining the closure member (32) in the second gas discharge duct (30).

11. Joule-Thomson cooler (1) comprising a part according to one of claims 1 to 7 or an assembly according to one of claims 8 to 10.

12. An infrared detection device comprising an infrared detector (D), and a Joule-Thomson cooler (1) according to any of claims 8 to 11 for cooling the infrared detector.

13. A method of manufacturing a part (10) for a Joule-Thomson expansion cooler configured to cool an object with a gas, the part (10) comprising:
• a first gas exhaust duct (8),
• a lid (15) closing the first gas evacuation duct (8), the lid (15) being adapted to rupture at least partially under the effect of a gas expansion triggered by the cooler (1) so as to allow the gas to be evacuated from the cooler through the gas evacuation duct,
• a second gas evacuation duct (30) separate from the first gas evacuation duct,
the method being **characterized in that** it comprises the implementation of an additive manufacturing process to obtain the part (10), the additive manufacturing process comprising stacking of powder layers along a stacking axis (Z) to form the part (10), the stacking axis (Z) being parallel to a central axis of the second gas evacuation duct (30).

14. The method of the preceding claim wherein the lid (15) is not parallel to the layers.

15. A method of manufacturing a Joule-Thompson cooler, comprising performing the method of any of claims 13 and 14.
